# EUROPÄISCHE PATENTSCHRIFT

(11) **EP 2 627 835 B1**
(45) Veröffentlichungstag und Bekanntmachung des Hinweises auf die Patenterteilung: **04.03.2015**
(21) Anmeldenummer: 12735581.6
(22) Anmeldetag: 19.07.2012
(51) Int. Cl.: E03C 1/28, E03C 1/298, E03D 13/00

(54) **URINAL UND VERFAHREN ZUM AUSTAUSCHEN EINES GERUCHSVERSCHLUSSES EINES URINALS**
URINAL, AND METHOD FOR REPLACING AN ODOUR SEAL OF A URINAL
URINOIR ET PROCÉDÉ DE REMPLACEMENT D'UNE FERMETURE ANTI-ODEURS D'UN URINOIR

(30) Priorität: 02.08.2011 DE 102011052370
(43) Veröffentlichungstag der Anmeldung: 21.08.2013
(73) Patentinhaber: Urimat Holding AG, 8832 Wollerau (CH)
(72) Erfinder: SCHMED, Arthur, CH-8832 Wollerau (CH); BALKAU, Werner, CH-8762 Schwändi b. Schwanden (CH)
(74) Vertreter: Müller, Eckhard
(86) Internationale Anmeldenummer: PCT/EP2012/064208
(87) Internationale Veröffentlichungsnummer: WO 2013/017424

(56) Entgegenhaltungen:
- WO-A2-2010/147322
- AU-B1- 2008 243 269
- DE-U1- 9 202 902
- DE-U1- 20 220 156
- DE-U1-202011 000 512
- FR-A1- 2 740 792
- US-A- 3 460 168

## Beschreibung

Die Erfindung betrifft ein Verfahren zum Austauschen eines Geruchsverschlusses eines Urinals.

Die Erfindung betrifft außerdem ein Urinal, das einen austauschbaren Geruchsverschluss aufweist.

Ein als Geruchsverschluss ausgebildetes Einfügebauteil ist beispielsweise aus DE 10 2009 008 574 A1 bekannt. Der Geruchsverschluss ist mit einer Einlauffläche versehen, die mindestens eine durch eine aufgesetzte Abdeckhaube abgedeckte Ablauföffnung aufweist. Der weist eine Verschlusseinrichtung auf, die in einer Grundstellung, die strömungsmäßige Verbindung zwischen einem Ablauf und eine Ablauföffnung verschließt und die sich im Falle eines Einlaufens einer bestimmten Menge von Urin in den Ablauf öffnet. Die Verschlusseinrichtung weist mindestens zwei, das Volumen einer Kammer begrenzende Kammer-Teile auf, wobei der erste Kammer-Teil ein Membranteil ist, das sich bei einer vorgegebenen, sich in der Kammer ansammelnden Menge an Flüssigkeit von dem anderen, zweiten Kammer-Teil abhebt und die Strömungsverbindung zu der Ablauföffnung hin freigibt.

Ein anderer Geruchsverschluss für ein Trockenurinal ist beispielsweise aus der CH 694 274 A5 bekannt. Dieser Geruchsverschluss umfasst einen Topf, der im oberen Bereich in der Mitte einer ringförmigen Einlauffläche eine Öffnung aufweist, die durch eine Verschlusskappe verschlossen ist. Die Verschlusskappe wird über einen Schaft von unten gegen den Rand der ringförmigen Einlauffläche gedrückt. Dieser verschlossene Zustand wird durch einen Magneten, der sich am unteren Ende des Schaftes befindet, und einen weiteren Magneten, der im Boden des Topfes eingesetzt ist, aufrechterhalten, indem sich die beiden Magnete gleicher Polarität abstoßen. Wenn sich eine ausreichende Menge an Urin und/oder Spülwasser auf der Verschlusskappe ansammelt, wird diese nach unten gedrückt, so dass die Flüssigkeit ablaufen kann.

Eine andere Art eines als Geruchsverschluss ausgebildeten Einfügebauteils für ein Urinal ist aus der EP 1 076 739 B1 bekannt. Bei diesem Geruchsverschluss wird anstelle der Verschlusskappe ein Schwimmkörper eingesetzt, der durch den Flüssigkeitsstand in dem Einsatz aufschwimmt und sich in die Öffnung der ringförmigen Einlauffläche einlegt.

Derartige, als Geruchsverschluss ausgebildete Einfügebauteile werden in Trockenurinalen verwendet und dienen dazu, den Ablauf in das Abwasserrohrleitungsnetz so zu verschließen, dass das Austreten von Gerüchen aus den Abwasserrohren vermieden wird. Darüber hinaus sollen derartige Geruchsverschlüsse gewährleisten, dass sie Urin vollständig zu dem Ablauf hin abführen, damit keine Rückstände im Bereich des Geruchsverschlusses verbleiben. Eine Wasserspülung, wie bei traditionellen Urinalen erfolgt nicht, wodurch Frischwasser eingespart wird. Zusätzlich können auf die Einlauffläche des Geruchsverschlusses Reinigungssteine aufgelegt werden, die sich unter der Einwirkung von Urin auflösen und so eine reinigende und desinfizierende Wirkung entfalten.

Aus EP 1 382 758 A2 ist ein Trockenurinal mit mechanischem Geruchsverschluss und mit spülrandlosen Becken bekannt. Bei diesem Trockenurinal verschließt ein Membranventil in einer ersten Stellung den Ablauf flüssigkeits- bzw. gasdicht. Das Membranventil ist in eine zweite Stellung überführbar, in der der Urin durch das Membranventil abfließen kann. Um die Reinigung des als Trockenurinal betriebenen Urinals zu vereinfachen, wird das Urinal und das nachfolgende Rohrsystem mittels eines fremdgesteuerten Spülsystems in vorgebbaren Zeitintervallen mit Spülwasser durchspült. Zu diesem Zweck ist das Becken mit einem speziellen Spülwasserverteiler versehen, der das Spülwasser im spülrandlosen Becken gezielt verteilt. Ganz explizit wird darauf hingewiesen, dass dieses Urinal nicht mit einem Spülrand versehen werden soll. Dies insbesondere, um einen variablen Abstand zwischen Zulauf und Ablauf des Spülwasseranschlusses zu erzielen.

Bei den aus dem Stand der Technik bekannten Urinalen muss der Geruchsverschluss von Zeit zu Zeit ausgewechselt werden. Hierbei kommt es oft zu einer Geruchsbelästigung. Diese ist besonders stark, wenn bei größeren Toilettenanlagen mit mehreren Urinalen zunächst sämtliche auszutauschenden Geruchsverschlüsse entfernt werden und erst anschließend Urinal für Urinal neue Geruchsverschlüsse eingesetzt werden. Insbesondere entwickelt sich ein starker Ammoniak-Geruch, welcher oft noch nach mehreren Stunden wahrnehmbar ist.

Aus DE 299 00 010 U1 ist ein Geruchsverschluss für ein Urinal bekannt. Der Geruchsverschluss weist ein austauschbaren Topf zum Einsetzten in das Urinal auf. Darüber hinaus ist eine in den Topfrahmen der Tauchwand zum Zurückhalten von Kanalgeruch aus der Ablaufleitung und eine auf den im Topf zum Sammeln bestimmten Urin schwimmende Geruchssperre vorgesehen. Die Geruchssperre weist einen Schwimmkörper auf.

Aus DE 10 2007 061 255 A1 ist ein System zum Spülen einer Vakuumtoilette in einem Flugzeug bekannt. Neben einem Standartgeruchsverschluss in der unmittelbaren Ablaufleitung des Urinals ist ein Geruchsverschluss für eine Nebenstromleitung vorgesehen.

Aus US 2006/0101565 A1 ist ein besonderer Einsatz für ein wasserloses Urinal bekannt.

Aus DE 20 2008 002 130 U1 ist ein Urinal mit einem mechanischen Geruchsverschluss bekannt. Der Geruchsverschluss weist eine durch ein Gegengewicht ausbalancierte Klappe auf.

Aus US 3,460,168 A ist ein Drainagesystem für Waschbecken und Toiletten bekannt. Das Drainagesystem beinhaltet einen Geruchsverschluss und ein dem Geruchsverschluss nachgeschaltetes Anti-Schaum-Ventil, das das Aufsteigen von Schaum verhindern soll, wie er durch das Einbringen von schäumenden Waschmitteln in das Ablaufrohrsystem eines Gebäudes entstehen kann.

Aus DE 202 20 156 U1 ist ein Geruchsverschluss für einen Ablauf bekannt. Der Geruchsverschluss weist ein Verschlusselement auf, das eine Auslassöffnung besitzt, die durch abfließende Flüssigkeit geöffnet werden kann. Darüber hinaus besitzt das Verschlusselement eine in dem Ablauf gehaltene Platte mit einer Öffnung und ein elastisches Membranelement, das an der Platte befestigt ist und in einem nicht belasteten Zustand die Öffnung verschließt und das durch abfließende Flüssigkeit gedehnt wird.

Aus DE 92 02 902 U1 ist eine Vorrichtung zur Desinfektion von Stauwasser in Geruchsverschlüssen bekannt. Die Vorrichtung besteht aus einem Ablauf, dem in Strömungsrichtung des Abwassers eine Behandlungszone nachgeschaltet ist, in der eine keimtötende Einrichtung vorgesehen ist, die mindestens teilweise Stauwasser beaufschlagt, das den Geruchsverschluss verschließt.

Es ist die Aufgabe der vorliegenden Erfindung, ein Verfahren zum Austauschen eines Geruchsverschlusses eines Urinals anzugeben, bei dem eine störende Geruchsbelästigung weitgehend vermieden ist.

Die Aufgabe wird durch ein Verfahren nach Anspruch 1 gelöst, das durch folgende Schritte gekennzeichnet ist:
a. Schließen eines weiteren Geruchsverschlusses des Urinals,
b. Entfernen des auszutauschenden Geruchsverschlusses,
c. Einfügen eines neuen Geruchsverschlusses, der den entfernten Geruchsverschluss ersetzt, und
d. Öffnen des weiteren Geruchsverschlusses, wobei der weitere Geruchsverschluss durch das Einfügen eines Einfügebauteils automatisch geöffnet wird, und
e. der neue Geruchsverschluss als das Einfügebauteil ausgebildet ist oder dass der neue Geruchsverschluss das Einfügebauteil aufweist.

Es ist eine weitere Aufgabe der vorliegenden Erfindung, ein Urinal anzugeben, bei dem bei der Wartung eine störende Geruchsbelästigung weitgehend vermieden ist.

Die weitere Aufgabe wird durch ein Urinal nach Anspruch 10 gelöst, wobei ein weiterer Geruchsverschluss vorgesehen ist und der Geruchsverschluss und der weitere Geruchsverschluss in Reihe geschaltet sind, wobei der weitere Geruchsverschluss automatisch geschlossen, wenn der auszutauschende Geruchsverschluss entfernt wird und durch das Entfernen des Einfügebauteils automatisch geschlossen wird und wobei der austauschbare Geruchsverschluss als das Einfügebauteil fungiert oder das Einfügebauteil aufweist.

Die Erfindung hat den ganz besonderen Vorteil, dass während des Vorganges des Austauschens eines Geruchsverschlusses weitgehend keine störend riechenden Gase entweichen können. Dies hat zur Folge, dass das Urinal bereits unmittelbar nach dem Austauschen gemäß dem erfindungsgemäßen Verfahren wieder benutzt werden kann, ohne dass der Benutzer durch unangenehme Gerüche belästigt wird. In der Praxis hat dies den weiteren Vorteil, dass ein Austauschen eines Geruchsverschlusses vorgenommen werden kann, ohne den Toiiettenraum langfristig zu sperren. Vielmehr kann sogar ein Austausch eines Geruchsverschlusses im Rahmen der regelmäßigen Reinigungsarbeiten problemlos mit erledigt werden.

Vorzugsweise wird der neue Geruchsverschluss derart eingefügt, dass er zu dem weiteren Geruchsverschluss in Reihe geschaltet ist. Diese Ausführung bietet den besonderen Vorteil, dass der weitere Geruchsverschluss eine weitgehend gasdichte Isolierung von den weiterführenden Ablaufleitungen, an die das Urinal angeschlossen ist, in dem Zeitraum gewährleisten kann, in dem der auszutauschende Geruchsverschluss durch einen neuen Geruchsverschluss ersetzt wird. Insbesondere kann vorgesehen sein, dass der neue Geruchsverschluss derart eingefügt wird, dass in ein Becken des Urinals eingebrachter Urin zunächst durch den neuen Geruchsverschluss und danach durch den weiteren Geruchsverschluss abläuft.

Bei einer ganz besonders vorteilhaften Ausführung wird der weitere Geruchsverschluss automatisch geschlossen, wenn der auszutauschende Geruchsverschluss entfernt wird. Eine solche Ausführung hat den ganz besonderen Vorteil, dass es nicht zu Fehlbedienungen kommen kann. Vielmehr ist gewährleistet, dass weitgehend stets einer der Geruchsverschlüsse geschlossen ist und so das Ausdringen störender Gase verhindert ist.

Insbesondere kann vorgesehen sein, dass der weitere Geruchsverschluss mit einer Betätigungsmechanik zum Öffnen und/oder Schließen des weiteren Geruchsverschlusses verkoppelt ist, die durch das Einfügen eines Einfügebauteils betätigt wird.

Wie bereits erwähnt, kann vorteilhaft vorgesehen sein, dass das Schließen des weiteren Geruchsverschlusses automatisch erfolgt. Insbesondere kann vorteilhaft vorgesehen sein, dass der weitere Geruchsverschluss durch das Entfernen des Einfügebauteils automatisch geschlossen wird. Von ganz besonderem Vorteil ist eine Ausführung, bei der - auch in Bezug auf das Schließen - der auszutauschende Geruchsverschluss als das Einfügebauteil ausgebildet ist und/oder dass der auszutauschende Geruchsverschluss das Einfügebauteil aufweist.

Eine Ausführung, bei der der auszutauschende Geruchsverschluss das Einfügebauteil bildet oder aufweist, bei dessen Entfernen der weitere Geruchsverschluss automatisch geschlossen wird, hat den ganz besonderen Vorteil, dass der Servicemitarbeiter, der mit dem Austausch des Geruchsverschlusses befasst ist, den Schritt des Schließens des weiteren Geruchsverschlusses nicht selbst vorzunehmen braucht. Insbesondere ist hierdurch vorteilhaft erreicht, dass es nicht zu Fehlbedienungen kommt. Von ganz besonderem Vorteil ist hierbei, dass der weitere Geruchsverschluss unmittelbar beim Entfernen des auszutauschenden Geruchsverschlusses geschlossen ist, so dass auch ein kurzfristiges Entweichen störender Gase weitgehend vermieden ist.

Von ganz besonderem Vorteil ist die bereits erwähnte Ausführung, bei der der neue Geruchsverschluss das Einfügebauteil bildet und/oder aufweist, das ein Öffnen des weiteren Geruchsverschlusses bewirkt, wenn es in das Urinal eingefügt wird. Bei dieser Ausführung muss der Servicemitarbeiter, der mit dem Austausch des Geruchsverschlusses befasst ist, den weiteren Geruchsverschluss nicht in einem separaten Arbeitsschritt öffnen. Vielmehr erfolgt das Öffnen durch das Einfügen des neuen Geruchsverschlusses automatisch. Dies hat den weiteren besonderen Vorteil, dass eine Fehlbedienung vermieden ist. Insbesondere ist vermieden, dass nach dem Einfügen des neuen Geruchsverschlusses der weitere Geruchsverschluss versehentlich geschlossen bleibt, was im schlimmsten Fall zu einem Urinstau im Urinal fügen könnte.

Von ganz besonderem Vorteil ist eine Ausführung, bei der der weitere Geruchsverschluss während des Entfernens des auszutauschenden Geruchsverschlusses automatisch geschlossen wird und bei der der weitere Geruchsverschluss beim Einfügen des neuen Geruchsverschlusses automatisch wieder geöffnet wird. Eine solche Ausführung hat den ganz besonderen Vorteil, dass der Servicemitarbeiter, der mit dem Austausch des Geruchsverschlusses befasst ist, keine zusätzlichen Arbeitsschritte - außer dem Entfernen des auszutauschenden Geruchsverschlusses und dem Einfügen des neuen Geruchsverschlusses - ausführen muss. Vielmehr erfolgt das Öffnen und Schließen des weiteren Geruchsverschlusses bei einer solchen Ausführung vollkommen automatisch.

In Bezug auf eine solche Lösung ist es von besonderem Vorteil, wenn der weitere Geruchsverschluss mit einer Betätigungsmechanik verkoppelt ist, die, ausgelöst durch das Einfügen des Einfügebauteils, den weiteren Geruchsverschluss öffnet und die bei Entfernen des Einfügebauteils den weiteren Geruchsverschluss schließt.

Natürlich kann alternativ zu einem automatischen Öffnen und/oder zu einem automatischen Schließen auch vorgesehen sein, dass der weitere Geruchsverschluss manuell geöffnet und/oder geschlossen wird.

Ein besonders guter Schutz vor störenden Gerüchen wird erreicht, wenn der weitere Geruchsverschluss zeitlich unmittelbar, bevor der auszutauschende Geruchsverschluss entfernt wird, geschlossen wird. Weitgehend ebenso wirksam ist es, wenn der weitere Geruchsverschluss geschlossen wird, während der auszutauschende Geruchsverschluss entfernt wird.

Alternativ ist es jedoch auch möglich, den weiteren Geruchsverschluss, unmittelbar nach dem der auszutauschende Geruchsverschluss entfernt wurde, zu schließen. Bei einer solchen Ausführung kann zwar in dem Zeitraum zwischen dem Entfernen des auszutauschenden Geruchsverschlusses und dem Schließen des weiteren Geruchsverschlusses etwas riechendes Gas entweichen. Dies jedoch in weitaus geringerer Menge, als bei herkömmlichen Austauschverfahren. Eine solche Lösung erlaubt insbesondere einen besonders einfachen Aufbau. Darüber hinaus kann vorteilhaft vorgesehen sein, dass der weitere Geruchsverschluss nach Entfernen des auszutauschenden Geruchsverschlusses durch den Aufnahmeraum hindurch, in dem der austauschende Geruchsverschluss zuvor angeordnet war, zugänglich wird und manuell, bspw. mit Hilfe eines Schraubendrehers, geschlossen werden kann.

In Bezug auf das Öffnen des weiteren Geruchsverschlusses ist es hinsichtlich eines möglichst geringen Gasaustrittes von besonderem Vorteil, wenn das Öffnen des weiteren Geruchsverschlusses zeitlich nach dem Einfügen des neuen Geruchsverschlusses erfolgt oder zumindest während des Einfügens des neuen Geruchsverschlusses erfolgt.

Es ist jedoch auch möglich, den weiteren Geruchsverschluss bereits unmittelbar vor dem Einfügen des neuen Geruchsverschlusses zu öffnen. Bei einer solchen Ausführung kann zwar in dem Zwischenzeitraum zwischen dem Öffnen des weiteren Geruchsverschlusses und dem Einfügen des neuen Geruchsverschlusses etwas riechendes Gas entweichen. Dies jedoch in weitaus geringerer Menge, als bei herkömmlichen Austauschverfahren. Eine solche Lösung erlaubt insbesondere einen besonders einfachen Aufbau.

Wie bereits erläutert, bietet hierbei eine automatisch gesteuerte Betätigungsmechanik den Vorteil, dass keine zusätzlichen Arbeitsschritte durch das Servicepersonal ausgeführt werden müssen. Es kann jedoch auch, insbesondere bei einfachen Ausführungen vorgesehen sein, dass das Öffnen des weiteren Geruchsverschlusses manuell, bspw. mittels eines Universalwerkzeuges, wie einem Schraubendreher oder einem Meisel, erfolgt.

Es kann in einer besonderen Ausführungsform der Erfindung auch vorgesehen sein, dass das Öffnen des weiteren Geruchsverschlusses zeitlich vor dem Einfügen des neuen Geruchsverschlusses durch bleibende Veränderungen, insbesondere Zerstörung, mindestens einen Teils des weiteren Geruchsverschlusses erfolgt. Eine solche Ausführung ist bspw. dann von Vorteil, wenn der weitere Geruchsverschluss als Refill-Bauteil zur Einmalbenutzung ausgebildet ist.

Bei einer ganz besonders vorteilhaften Ausführung ist der weitere Geruchsverschluss mit einer Betätigungsmechanik zum Öffnen und/oder Schließen verkoppelt. Die Betätigungsmechanik kann vorteilhaft mindestens einen Betätigungshebel aufweisen. Insbesondere kann vorgesehen sein, dass die Betätigungsmechanik mindestens einen Betätigungshebel aufweist, der - wenigstens dann, wenn kein Einfügebauteil eingefügt ist - in einen Aufnahmeraum für das Einfügebauteil ragt. Die insbesondere derart, dass der Betätigungshebel beim Einfügen des neuen Geruchsverschlusses aus dem Aufnahmeraum verdrängt wird, wobei die hierbei vom Betätigungshebel ausgeführte Bewegung das Öffnen des weiteren Geruchsverschlusses bewirkt.

Es kann alternativ oder zusätzlich auch vorgesehen sein, dass die Betätigungsmechanik mindestens einen Betätigungshebel aufweist, der mittels des Einfügebauteils (bspw. auszutauschender Geruchsverschluss und/oder neuer Geruchsverschluss) verstellbar ist.

In vorteilhafter Weise ist bei einer besonderen Ausführung vorgesehen, dass eine Rückstellkraft die Betätigungsmechanik automatisch in die Geschlossenstellung drückt. Die Rückstellkraft kann bspw. von einer Federvorrichtung aufgebracht werden. Es kann alternativ oder zusätzlich jedoch auch vorgesehen sein, dass die Rückstellkraft durch die auf den weiteren Geruchsverschluss und/oder auf ein Gewicht, das an dem weiteren Geruchsverschluss angeordnet ist, wirkende Gewichtskraft bewirkt ist.

Wie bereits erwähnt, kann in vorteilhafter Weise vorgesehen sein, dass das Einfügebauteil ein Öffnen und/oder Schließen des weiteren Geruchsverschlusses - bspw, mit Hilfe einer Betätigungsmechanik - bewirkt.

In Bezug auf das Einfügebauteil kann alternativ oder zusätzlich jedoch auch vorgesehen sein, dass das Einfügebauteil einen Einlauf für ein in ein Becken des Urinals eingebrachten Urin aufweist. Es kann alternativ oder zusätzlich auch vorgesehen sein, dass das Einfügebauteil einen Aufnahmeraum für einen Reinigungsstein aufweist. Es ist alternativ oder zusätzlich vorteilhaft auch möglich, dass das Einfügebauteil eine Haube aufweist, unter der ein Reinigungsstein positionierbar und/oder positioniert ist. Besonders vorteilhaft kann - alternativ oder zusätzlich - auch vorgesehen sein, dass das Einfügebauteil dazu ausgebildet ist, in ein Becken und/oder in eine Ablauföffnung des Urinals eingefügt zu werden.

Insbesondere kann vorteilhaft vorgesehen sein, dass das Einfügebauteil mindestens eine Dichtung zum wasserdichten und/oder gasdichten Einfügen des Einfügebauteils in ein Becken und/oder in eine Ablauföffnung des Urinals aufweist.

Der weitere Geruchsverschluss weist bei einer vorteilhaften Ausführung eine Verschlussklappe auf. Insbesondere kann eine Verschlussklappe vorgesehen sein, an der ein Betätigungshebel angeordnet ist. Der Betätigungshebel dient bei einer besonderen Ausführung zur Ankopplung der Verschlussklappe an eine Öffnungs- und/oder Schließmechanik.

Von ganz besonderem Vorteil ist es, wenn das erfindungsgemäße Urinal als Trockenurinal ausgebildet ist. Insbesondere bei solchen Urinalen ist ein geruchsdichter Abschluss von den Fäkalienleitungen besonders wichtig, weil eine Spülung mit Spülwasser zumeist allenfalls in großen zeitlichen Abständen durch das Reinigungspersonal erfolgt.

Vorzugsweise ist die weitere Geruchsvorrichtung derart ausgebildet, dass sie sich aus Sicherheitsgründen in jedem Fall dann öffnet, wenn große Mengen an Spülwasser in das Becken des Urinals eingebracht werden, um der Gefahr eines Überlaufens des Beckens des Urinals zu begegnen. Hierfür kann bswp. vorgesehen sein, dass die auf eine Verschlussklappe des weiteren Geruchsverschlusses wirkenden Rückstellkraft derart begrenzt ist, dass die Verschlussklappe von dem Spülwasser gewichtskraftbedingt aufgedrückt wird, wenn die Menge an Spülwasser ein vorbestimmtes und/oder vorbestimmbares Maß überschreitet.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine Detaildarstellung eines erfindungsgemäßen Urinals mit einem eingefügten auszutauschenden Geruchsverschluss und
- Fig. 2: das erfindungsgemäße Urinal in der Phase des Entfernens des auszutauschenden Geruchsverschlusses.

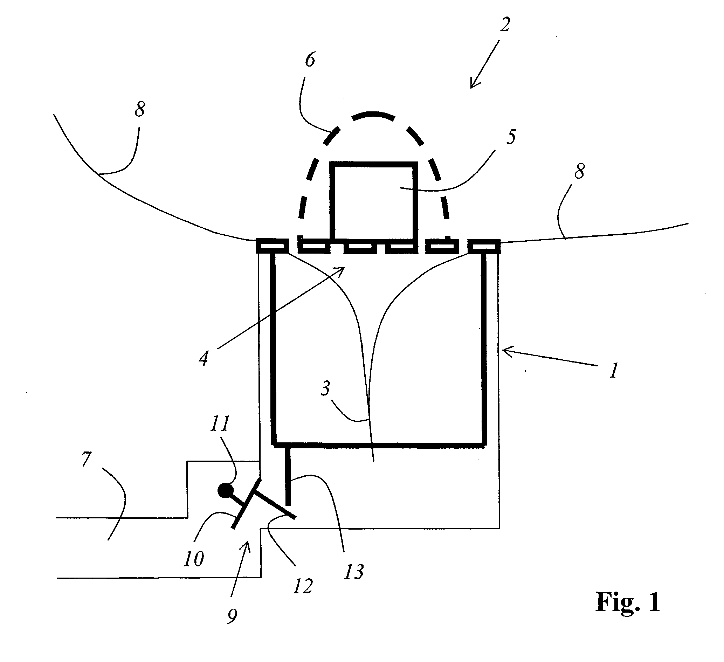

Fig. 1 zeigt eine Detaildarstellung eines erfindungsgemäßen Urinals mit einem in eine Ablauföffnung 1 des Urinals eingefügten auszutauschenden Geruchsverschluss 2. Der auszutauschende Geruchsverschluss 2 ist als Einfügebauteil ausgebildet, das ein Schlauchventil 3 aufweist. Oberhalb des Schlauchventils 3 ist ein Sieb 4 angeordnet, das einen Reinigungsstein 5 trägt. Es ist eine Haube 6 mit Öffnungen vorgesehen, die einen Aufnahmeraum für den Reinigungsstein 5 bereit stellt.

Der als Einfügebauteil ausgebildete, auszutauschende Geruchsverschluss 2 ist in der Ablauföffnung 1 des Urinals derart angeordnet, das in ein Becken 8 des Urinals (nur teilweise dargestellt) eingebrachter Urin durch das Sieb 4 und anschließend durch das Schlauchventil 3 abläuft.

Das Urinal weist darüber hinaus einen weiteren Geruchsverschluss 9 auf, mit dem ein geruchsdichtes Verschließen des Zuganges zu einer Ablaufleitung 7 verschlossen werden kann. Der weitere Geruchsverschluss 9 weist eine Verschlussklappe 10 auf zum Verschließen eines Durchgangs 11 auf. An der Verschlussklappe 10 ist ein Gewicht 11 angeordnet, dass die Verschlussklappe 10 gewichtskraftbedingt in die Verschlussstellung drückt.

An der Verschlussklappe 10 ist außerdem ein Betätigungshebel 12 angeordnet, der die Verschlussklappe 10 gegen die durch das Gewicht 11 bewirkte Rückstellkraft öffnet, wenn er nach unten verschwenkt wird.

In der dargestellten Situation wird der Betätigungshebel 12 mittels eines an dem auszutauschenden Geruchsverschluss 2 angeordneten Vorsprung 13 nach unten gedrückt, so dass der weitere Geruchsverschluss in der dargestellten Situation geöffnet ist, solange der auszutauschende Geruchsverschluss 2 in der Ablauföffnung 1 verbleibt.

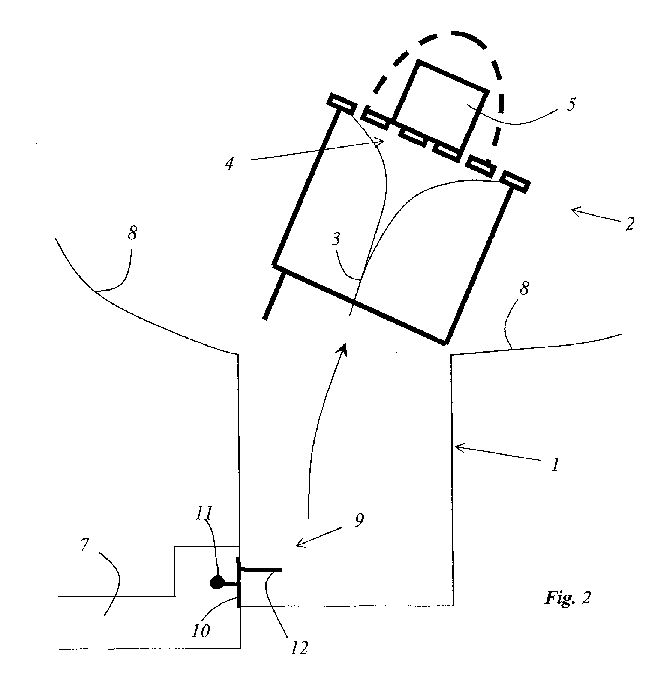

Sobald der auszutauschende Geruchsverschluss 2 aus der Ablauföffnung 1 entfernt wird, wird die Verschlussklappe 10 durch das Gewicht 11 in die Geschlossenstellung verschwenkt, weil der Betätigungshebel 12 von dem an dem auszutauschenden Geruchsverschluss 2 angeordneten Vorsprung 13 nicht mehr nach unten gedrückt wird. Dies ist in Figur 2 dargestellt.

Nach dem Entfernen des auszutauschenden Geruchsverschlusses 2 kann ein neuer Geruchsverschluss eingefügt werden, der seinerseits auch einen Vorsprung 13 aufweist. Durch das Einfügen des neuen Geruchsverschlusses wird der Betätigungshebel 12 mittels des an dem neuen Geruchsverschluss angeordneten Vorsprung nach unten gedrückt, so dass der weitere Geruchsverschluss wieder geöffnet wird und geöffnet bleibt, solange der neue Geruchsverschluss 2 in der Ablauföffnung 1 verbleibt.

### Bezugszeichenliste

- 1: Ablauföffnung
- 2: auszutauschender Geruchsverschluss
- 3: Schlauchventil
- 4: Sieb
- 5: Reinigungsstein
- 6: Haube
- 7: Ablaufleitung
- 8: Becken
- 9: weiterer Geruchsverschluss
- 10: Verschlussklappe
- 11: Gewicht
- 12: Betätigungshebel
- 13: Vorsprung

## Patentansprüche

1. Verfahren zum Austauschen eines Geruchsverschlusses (2) eines Urinals **gekennzeichnet durch** folgende Schritte:
a.) Schließen eines weiteren Geruchsverschlusses (9) des Urinals,
b.) Entfernen des auszutauschenden Geruchsverschlusses (2)
c.) Einfügen eines neuen Geruchsverschlusses, der den entfernten Geruchsverschluss (2) ersetzt, und
d.) Öffnen des weiteren Geruchsverschlusses (9), wobei der weitere Geruchsverschluss (9) **durch** das Einfügen eines Einfügebauteils automatisch geöffnet wird, und
e.) der neue Geruchsverschluss als das Einfügebauteil ausgebildet ist oder dass der neue Geruchsverschluss das Einfügebauteil aufweist.

2. Verfahren nach Anspruch 1, **dadurch gekennzeichnet, dass** der neue Geruchsverschluss derart eingefügt wird, dass er zu dem weiteren Geruchsverschluss (9) in Reihe geschaltet ist.

3. Verfahren nach Anspruch 1 oder 2, **dadurch gekennzeichnet, dass** der neue Geruchsverschluss derart eingefügt wird, dass in ein Becken des Urinals eingebrachter Urin zunächst durch den neuen Geruchsverschluss und danach durch den weiteren Geruchsverschluss (9) abläuft.

4. Verfahren nach einem der Ansprüche 1 bis 3, **dadurch gekennzeichnet, dass** der weitere Geruchsverschiuss (9) mit einer Betätigungsmechanik verkoppelt ist, die durch das Einfügen eines Einfügebauteils betätigt wird.

5. Verfahren nach einem der Ansprüche 1 bis 4, **dadurch gekennzeichnet, dass** der weitere Geruchsverschluss (9) geschlossen wird, während der auszutauschende Geruchsverschluss (2) entfernt wird.

6. Verfahren nach Anspruch 5, **dadurch gekennzeichnet, dass** das Schließen des weiteren Geruchsverschlusses (9) automatisch erfolgt.

7. Verfahren nach einem der Ansprüche 1 bis 6, **dadurch gekennzeichnet, dass** der weitere Geruchsverschluss (9) durch das Entfernen des Einfügebauteils automatisch geschlossen wird.

8. Verfahren nach einem der Ansprüche 1 bis 7, **dadurch gekennzeichnet, dass** das Öffnen des weiteren Geruchsverschlusses (9) während des Einfügens des neuen Geruchsverschlusses erfolgt.

9. Verfahren nach einem der Ansprüche 1 bis 8, **dadurch gekennzeichnet, dass** der weitere Geruchsverschluss (9) mit einer Betätigungsmechanik verkoppelt ist, die ausgelöst durch das Einfügen des Einfügebauteils den weiteren Geruchsverschluss (9) öffnet und die bei Entfernen des Einfügebauteils den weiteren Geruchsverschluss (9) schließt.

10. Urinal, das einen austauschbaren Geruchsverschluss (2) und einen weiteren Geruchsverschluss (9) aufweist, wobei der austauschbare Geruchsverschluss (2) und der weitere Geruchsverschluss (9) in Reihe geschaltet sind, **dadurch gekennzeichnet, dass** ein Einfügebauteil vorhanden ist und dass der weitere Geruchsverschluss (9) derart ausgebildet und angeordnet ist, dass er durch das Einfügen des Einfügebauteils in das Urinal automatisch geöffnet und durch das Entfernen des Einfügebauteils aus dem Urinal automatisch geschlossen wird, wobei der austauschbare Geruchsverschluss (2) als das Einfügebauteil fungiert oder das Einfügebauteil aufweist.

11. Urinal nach Anspruch 10, **dadurch gekennzeichnet, dass** der weitere Geruchsverschluss (9) eine gasdichte Isolierung von weiterführenden Ablaufleitungen (7) in dem Zeitraum gewährleistet, in der der austauschbare Geruchsverschluss (2) durch einen neuen Geruchsverschluss ersetzt wird.

12. Urinal nach Anspruch 10 oder 11, **dadurch gekennzeichnet, dass** der Geruchsverschluss (2) derart eingefügt ist, dass in ein Becken (8) des Urinals eingebrachter Urin zunächst durch den austauschbaren Geruchsverschluss (2) und danach durch den weiteren Geruchsverschluss (9) abläuft.

13. Urinal nach einem der Ansprüche 10 bis 12, **dadurch gekennzeichnet, dass** der weitere Geruchsverschluss (9) mit einer Betätigungsmechanik verkoppelt ist, die derart ausgebildet und angeordnet ist, dass sie ausgelöst durch ein Einfügen des Einfügebauteils den weiteren Geruchsverschluss (9) öffnet oder dass sie ausgelöst durch ein Entfernen des Einfügebauteils den weiteren Geruchsverschluss (9) schließt.

14. Urinal nach Anspruch 13, **dadurch gekennzeichnet, dass** die Betätigungsmechanik mindestens einen Betätigungshebel (12) aufweist, der mittels des Einfügebauteils gegen eine Rückstellkraft verstellbar angeordnet ist.

15. Urinal nach einem der Ansprüche 10 bis 14, **dadurch gekennzeichnet, dass** das Einfügebauteil einen Einlauf für in das Becken (8) des Urinals eingebrachten Urin aufweist und in eine Ablauföffnung (13) des Urinals im Becken (8) eingefügt ist.

16. Urinal nach einem der Ansprüche 10 bis 15, **dadurch gekennzeichnet, dass** der weitere Geruchsverschluss (9) eine Verschlussklappe (10) aufweist, an der der Betätigungshebel (12) angeordnet ist.

17. Urinal nach Anspruch 16, **dadurch gekennzeichnet, dass** die auf die Verschlussklappe (10) wirkende Gewichtskraft diese in die Geschlossenstellung drückt oder dass eine Federvorrichtung vorgesehen ist, die die Verschlussklappe (10) in die Geschlossenstellung drückt.

18. Urinal nach einem der Ansprüche 10 bis 17, **dadurch gekennzeichnet, dass** das Urinal als Trockenurinal ausgebildet ist.

## Claims

1. Method for replacing an odour seal (2) of a urinal, **characterized by** the following steps:
a.) closing a further odour seal (9) of the urinal,
b.) removing the odour seal (2) to be replaced,
c.) inserting a new odour seal which substitutes the removed odour seal (2), and
d.) opening the further odour seal (9), wherein the further odour seal (9) is automatically opened by inserting an insertion component, and
e.) the new odour seal is configured as the insertion component, or in that the new odour seal comprises the insertion component.

2. Method according to Claim 1, **characterized in that** the new odour seal is inserted in such a manner that said new odour seal is connected in series to the further odour seal (9).

3. Method according to Claim 1 or 2, **characterized in that** the new odour seal is inserted in such a manner that urine which is introduced into a bowl of the urinal initially runs off through the new odour seal and thereafter through the further odour seal (9).

4. Method according to one of Claims 1 to 3, **characterized in that** the further odour seal (9) is coupled to an actuation mechanism which is actuated by the insertion of an insertion component.

5. Method according to one of Claims 1 to 4, **characterized in that** the further odour seal (9) is closed while the odour seal (2) to be replaced is removed.

6. Method according to Claim 5, **characterized in that** the closing of the further odour seal (9) takes place automatically.

7. Method according to one of Claims 1 to 6, **characterized in that** the further odour seal (9) is automatically closed by the removal of the insertion component.

8. Method according to one of Claims 1 to 7, **characterized in that** the opening of the further odour seal (9) takes place during the insertion of the new odour seal.

9. Method according to one of Claims 1 to 8, **characterized in that** the further odour seal (9) is coupled to an actuation mechanism which, triggered by the insertion of the insertion component, opens the further odour seal (9) and upon removal of the insertion component closes the further odour seal (9).

10. Urinal which comprises a replaceable odour seal (2) and a further odour seal (9), wherein the replaceable odour seal (2) and the further odour seal (9) are connected in series, **characterized in that** an insertion component is provided and **in that** the further odour seal (9) is configured and disposed in such a manner that said further odour seal (9) is automatically opened by the insertion of the insertion component into the urinal and is automatically closed by the removal of the insertion part from the urinal, wherein the replaceable odour seal (2) functions as the insertion component or is provided with the insertion component.

11. Urinal according to Claim 10, **characterized in that** the further odour seal (9) in the time period in which the replaceable odour seal (2) is replaced by a new odour seal ensures gas-tight insulation of drain lines (7) which lead onwards.

12. Urinal according to Claim 10 or 11, **characterized in that** the odour seal (2) is inserted in such a manner that urine which is introduced into a bowl (8) of the urinal initially runs off through the replaceable odour seal (2) and thereafter through the further odour seal (9).

13. Urinal according to one of Claims 10 to 12, **characterized in that** the further odour seal (9) is coupled to an actuation mechanism which is actuated and disposed in such a manner that said further odour seal (9), triggered by an insertion of the insertion component, opens the further odour seal (9) or **in that** said further odour seal (9), triggered by a removal of the insertion component, closes the further odour seal (9).

14. Urinal according to Claim 13, **characterized in that** the actuation mechanism comprises at least one actuation lever (12) which is disposed so as to be adjustable counter to a restoring force by means of the insertion component.

15. Urinal according to one of Claims 10 to 14, **characterized in that** the insertion component comprises an inlet for urine which is introduced into the bowl (8) of the urinal and is inserted into a drain opening (13) of the urinal in the bowl (8).

16. Urinal according to one of Claims 10 to 15, **characterized in that** the further odour seal (9) comprises a closure flap (10) on which the actuation lever (12) is disposed.

17. Urinal according to Claim 16, **characterized in that** the weight acting on the closure flap (10) pushes the latter into the closed position or **in that** a spring device which pushes the closure flap (10) into the closed position is provided.

18. Urinal according to one of Claims 10 to 17, **characterized in that** the urinal is configured as a waterless urinal.

## Revendications

1. Procédé pour remplacer une fermeture anti-odeurs (2) d'un urinoir, **caractérisé par** les étapes suivantes:
a) fermeture d'une autre fermeture anti-odeurs (9) de l'urinoir,
b) enlèvement de la fermeture anti-odeurs à remplacer (2),
c) insertion d'une nouvelle fermeture anti-odeurs, qui remplace la fermeture anti-odeurs enlevée (2), et
d) ouverture de l'autre fermeture anti-odeurs (9), l'autre fermeture anti-odeurs (9) étant ouverte automatiquement par l'insertion d'un composant insérable, et
e) la nouvelle fermeture anti-odeurs est constituée par le composant insérable ou la nouvelle fermeture anti-odeurs comprend le composant insérable.

2. Procédé selon la revendication 1, **caractérisé en ce que** la nouvelle fermeture anti-odeurs est insérée de telle manière qu'elle soit montée en série avec l'autre fermeture anti-odeurs (9).

3. Procédé selon la revendication 1 ou 2, **caractérisé en ce que** la nouvelle fermeture anti-odeurs est insérée de telle manière que l'urine déposée dans une cuvette de l'urinoir s'écoule d'abord à travers la nouvelle fermeture anti-odeurs et ensuite à travers l'autre fermeture anti-odeurs (9).

4. Procédé selon l'une quelconque des revendications 1 à 3, **caractérisé en ce que** l'autre fermeture anti-odeurs (9) est couplée à un mécanisme d'actionnement, qui est actionné par l'insertion d'un composant insérable.

5. Procédé selon l'une quelconque des revendications 1 à 4, **caractérisé en ce que** l'autre fermeture anti-odeurs (9) est fermée pendant que la fermeture anti-odeurs à remplacer (2) est enlevée.

6. Procédé selon la revendication 5, **caractérisé en ce que** la fermeture de l'autre fermeture anti-odeurs (9) se produit automatiquement.

7. Procédé selon l'une quelconque des revendications 1 à 6, **caractérisé en ce que** l'autre fermeture anti-odeurs (9) est fermée automatiquement par l'enlèvement du composant insérable.

8. Procédé selon l'une quelconque des revendications 1 à 7, **caractérisé en ce que** l'ouverture de l'autre fermeture anti-odeurs (9) se produit pendant l'insertion de la nouvelle fermeture anti-odeurs.

9. Procédé selon l'une quelconque des revendications 1 à 8, **caractérisé en ce que** l'autre fermeture anti-odeurs (9) est couplée à un mécanisme d'actionnement, qui ouvre l'autre fermeture anti-odeurs (9) en étant déclenché par l'insertion du composant insérable et qui ferme l'autre fermeture anti-odeurs (9) lors de l'enlèvement du composant insérable.

10. Urinoir, qui comprend une fermeture anti-odeurs remplaçable (2) et une autre fermeture anti-odeurs (9), dans lequel la fermeture anti-odeurs remplaçable (2) et l'autre fermeture anti-odeurs (9) sont montées en série, **caractérisé en ce qu'**il comporte un composant insérable et **en ce que** l'autre fermeture anti-odeurs (9) est configurée et disposée de telle manière qu'elle s'ouvre automatiquement par l'insertion du composant insérable dans l'urinoir et qu'elle se ferme automatiquement par l'enlèvement du composant insérable hors de l'urinoir, dans lequel la fermeture anti-odeurs remplaçable (2) fait office de composant insérable ou comprend le composant insérable.

11. Urinoir selon la revendication 10, **caractérisé en ce que** l'autre fermeture anti-odeurs (9) garantit une isolation étanche aux gaz des conduites d'évacuation ultérieures (7) pendant le laps de temps où la fermeture anti-odeurs remplaçable (2) est remplacée par une nouvelle fermeture anti-odeurs.

12. Urinoir selon la revendication 10 ou 11, **caractérisé en ce que** la fermeture anti-odeurs (2) est insérée de telle manière que l'urine déposée dans une cuvette (8) de l'urinoir s'écoule d'abord à travers la fermeture anti-odeurs remplaçable (2) et ensuite à travers l'autre fermeture anti-odeurs (9).

13. Urinoir selon l'une quelconque des revendications 10 à 12, **caractérisé en ce que** l'autre fermeture anti-odeurs (9) est couplée à un mécanisme d'actionnement, qui est configuré et disposé de telle manière qu'il ouvre l'autre fermeture anti-odeurs (9) en étant déclenché par l'insertion du composant insérable et qu'il ferme l'autre fermeture anti-odeurs (9) en étant déclenché par l'enlèvement du composant insérable.

14. Urinoir selon la revendication 13, **caractérisé en ce que** le mécanisme d'actionnement comprend au moins un levier d'actionnement (12), qui est disposé de façon déplaçable au moyen du composant insérable contre une force de rappel.

15. Urinoir selon l'une quelconque des revendications 10 à 14, **caractérisé en ce que** le composant insérable comprend une entrée pour l'urine déposée dans la cuvette (8) de l'urinoir et il est inséré dans une ouverture d'évacuation (13) de l'urinoir dans la cuvette (8).

16. Urinoir selon l'une quelconque des revendications 10 à 15, **caractérisé en ce que** l'autre fermeture anti-odeurs (9) comprend un clapet de fermeture (10), sur lequel le levier d'actionnement (12) est disposé.

17. Urinoir selon la revendication 16, **caractérisé en ce que** la force pondérale agissant sur le clapet de fermeture (10) presse celui-ci dans la position fermée ou **en ce qu'**il est prévu un dispositif de ressort qui presse le clapet de fermeture (10) dans la position fermée.

18. Urinoir selon l'une quelconque des revendications 10 à 17, **caractérisé en ce que** l'urinoir est un urinoir sans eau.
